# EUROPEAN PATENT APPLICATION

(11) **EP 1 707 477 A1**
(43) Date of publication of application: **04.10.2006**
(21) Application number: 06075754.9
(22) Date of filing: 28.03.2006
(51) Int. Cl.: B62D 29/00, B62D 21/00, B60J 5/04, B60R 13/08

(54) **A part for placement within a hollow member, and corresponding foaming process**

(30) Priority: 30.03.2005 GB 0506404
(71) Applicant: L & L Products, Inc., Romeo, MI 48065 (US)
(72) Inventor: Mendiboure, Jean Core Products, 67129 Molsheim cedex (FR); Chopin, Eric Core Products, 67129 Molsheim cedex (FR); Crouzet, François Core Products, 67129 Molsheim cedex (FR); Bieber, Serge Core Products, 67129 Molsheim cedex (FR)
(74) Representative: Bawden, Peter Charles

(57) **Abstract**

Components useful for the provision of structural reinforcement of hollow profiles and/or sealants and/or acoustic baffles are provided. The components comprise a carrier (1) in which is formed a plurality of cavities (2) for receipt of foamable material (3), the foam may then be foamed to bridge the gap between the carrier and the internal surface of the hollow profile to form a bond there between. Different types of foam may be employed in different cavities to provide a multifunctional component.

## Description

The present invention relates to improvements in or relating to parts that may be used to provide structural reinforcement and/or baffles and/or sealants within hollow profile structures.

It is well known to provide structural reinforcement and/or baffles and/or sealants within hollow profile structures such as the box structures of automobile frames and in other forms of transportation such as aircraft, railroad vehicles, trucks and busses. It is also known that the reinforcement and/or the baffle and/or the sealant can be provided by inserting a carrier carrying a foamable material into the box like structure. The foamable material may then be foamed, usually by the application of heat, to fill any gap between the foamable material and the interior surface of the box structure. The foamable material may be chosen according to the properties it is desired to impart. For example if it is desired to impart structural reinforcement the foamable material should be such that it will provide strengthening and a material that forms a rigid foam upon expansion such as polyurethane or epoxy foam may be employed. Alternatively when it is desired to provide an acoustic baffle or a sealant to prevent, for example, the passage of water or air the foamable material may be such that it will have a high expansion ratio and produce a relatively soft foam.

It is also known in the production of automobiles that a part may be inserted into the vehicle frame prior to subjecting the frame to an anticorrosion treatment (sometimes known as e-coat) and the foamable material is chosen so that it will foam under the conditions used for the drying of the anticorrosion coating.

It is also know that the foamable material may be provided on a carrier and in the processes currently used the foamable material is physically or chemically attached to the carrier. The attachment may be accomplished by use of an adhesive, by mechanical attachment such as by push pins or alternatively it may be attached by an adhesive coating process such as extrusion coating or overmoulding. Whichever technique is used a special method for attachment is required which adds to the expense of production of the part.

In certain situations it may be desirable that the part form two or more functions. For example it may be required to perform a reinforcing and strengthening function as well as performing a sealant and/or baffle function. Although parts have been proposed that will serve such a multifunction they are cumbersome to produce and to date have not operated effectively to provide the combination of functions.

There therefore remains a need to simplify the provision of such parts. Separately there is also a need to provide flexibility in the function that is provided by the part.

The present invention therefore provides a part for placement within a hollow member comprising a core comprising a plurality of cavities in which foamable material is removably located therein the cavities being shaped so that upon expansion of the foamable material the foam extends beyond the cavity to bridge the gap between the core and the interior surface of the hollow member to form a bond therebetween.

The part may be for reinforcement of the hollow member or it may be used to provide a sealant or act as an acoustic baffle. The part will be sized and shaped according to the function it is to perform, its location in relation to the hollow member and the configuration of the hollow member. The core of the part is provided with a plurality of cavities which may be in the form of a honeycomb structure, an ice tray structure or two or more tubular cavities which may be of any cross section. The core may be of any suitable material providing it is not adversely affected by the conditions that are used in the foaming operation, for example it is desirable that the carrier does not melt at the temperature or below the temperature at which foaming takes place.

The core may be made of any suitable material although preferred materials comprise metals such as steel and aluminium or synthetic materials such as thermosetting or thermoplastic materials. Particularly preferred materials are polyurethane's and thermosetting polyesters and thermoplastics such as polyamides or polyolefin's such as polypropylene. In a particularly preferred embodiment the core is derived from a fibre reinforced thermoplastic especially polyamide (nylon) or polypropylene filled with glass fibre, metal fibre and/or carbon fibre. We have found that a core provided with a plurality of cavities may conveniently be produced by the injection moulding of synthetic materials. In a particularly preferred embodiment the cavities in the carrier are shaped so that they can physically retain a piece of the foamable material when it is introduced into the cavity. For example the cavities may be tapered tubular structures with the wide end of the taper at the opening of the cavity so that a piece, for instance a cylinder, of the foamable material may be inserted into the cavity where it will be retained by the narrowing of the tapered bore of the cavity.

The nature of the foamable material will be chosen so that it will adhere to both the carrier and the internal surface of the structure and according to the function that the component is desired to perform after foaming. For example if the component is to perform a reinforcing and strengthening function then a rigid foam is preferred. Examples of suitable rigid foams include epoxy foams such as the Core materials available from Core Products of Strasbourg, polyurethane foams particularly blocked polyurethane foams which are provided with blocking groups designed to be liberated to enable reaction at the temperature at which foaming is desired to take place.

The core of the system of the present invention may be a skeleton member adapted for stiffening the structure to be reinforced and helping to redirect applied loads. In use, the skeleton member is in contact, over at least a portion of its outer surface with an energy absorbing foam. In a particular preferred embodiment, the member could be an injection moulded nylon carrier, an injection moulded polymer, or a moulded metal (such as aluminium, magnesium and titanium, an alloy derived from the metals, and even a metallic foam). Still further, the member adapted for stiffening the structure to be reinforced could comprise a stamped and formed cold-rolled steel, a stamped and formed high strength low alloy steel, a stamped and formed transformation induced plasticity (TRIP) steel, a roll formed cold rolled steel, a roll formed high strength low alloy steel, or a roll formed transformation induced plasticity (TIP) steel. The chosen skeleton is provided with cavities at least some of which contain a foamable or expandable material, which can foam and bond to both the member and the structure to be reinforced. Materials useful for the production of reinforcing foams are epoxy-based resins, such as L5204, L5206, L5207, L5208 or L5209 structural foam commercially available from L & L Products, Inc. of Romeo, Michigan. Additional foamable or expandable materials that could be utilised in the present invention include other materials which are suitable as bonding mediums and which may be heat activated foams which activate and expand to fill a desired cavity or occupy a desired space or function when exposed to temperatures typically encountered in automotive e-coat and other paint operations.

If however the component is desired to provide a sealant for example to prevent the flow of moisture or air the foamable material may have a high expansion ratio to produce a soft closed cell foam. Alternatively if the component is to serve the function of an acoustic baffle the foamable material may have a high expansion ratio and the foam may be soft and open cell. For example foams produced from thermoplastic ester containing polymers and copolymers may be used.

Though other heat-activated materials are possible, a preferred heat activated material is an expandable or flowable polymeric formulation, and preferably one that is activated to foam, flow or otherwise change states when exposed to the heating operation of a typical automotive assembly painting operation. For example, without limitation, in one embodiment, the polymeric foam is based on ethylene copolymer or terpolymer that may possess an alpha-olefin. As a copolymer or terpolymer, the polymer is composed of two or three different monomers, i.e. small molecules with high chemical reactivity that are capable of linking up with similar molecules. Examples of particularly preferred polymers include ethylene vinyl acetate, EPDM, or a mixture thereof. Without limitation, other examples of preferred foam formulations that are commercially available include polymer-based material commercially available from L & L Products, Inc. of Romeo, Michigan, under the designations as L-2105, L-2100, L-7005 or L-2018, L-7101, L-7102, L-2411, L-2412, L-4141 etc and may comprise either open or closed cell polymeric base material.

A number of other suitable materials are known in the art and may also be used for vibration reduction. One such foam preferably includes a polymeric base material, such as an ethylene-based polymer which, when compounded with appropriate ingredients (typically a blowing and curing agent), expands and cures in a reliable and predictable manner upon the application of heat or the occurrence of a particular ambient condition. Form a chemical standpoint for a thermally activated material, the vibration reducing foam is usually initially processed as a flowable thermoplastic material before curing. It will cross-link upon curing, which makes the material resistant of further flow or change of final shape. For example, in the present invention relating to an automotive pillar, the heat activated expandable material fills a gap between a body side outer panel and a reinforcement panel.

The foamable material may be provided within the cavities of the carrier in any suitable manner. It may be deposited directly into the cavities by an applicator such as extrusion in place equipment. Alternatively the foamable material may be preformed into an appropriate shape for insertion into the cavity. In a preferred embodiment where the cavities are tapered for retention of the foamable material the foamable material is an elongated shape so that it may be inserted into the cavity and retained by the tapering of the cavity, in a preferred embodiment the cross section of the piece of foamable material matches the cross section of the cavity.

A particular advantage of the present invention is that different foamable materials may be used in different cavities or in different parts of the same cavity to provide a component serving more than one function after foaming. For example it may be desirable to provide strengthening and reinforcement on one side of the component and a sealing function on another side of the component. This may be accomplished according to the present invention by providing a foamable material suitable for reinforcement in certain of the cavities and a foamable material suitable for providing a sealant in other cavities. Alternatively different foamable materials may be provided in the same cavities, for example different foamable materials may be provided at different ends of a cavity that passes through the entire carrier. An additional advantage is that no complex overmoulding operations are required in the production of the part and also the invention allows for easy removal, addition or replacement of foamable materials.

The techniques of the present invention are particularly useful for the provision of components that may be provided within metal box sections of automobiles in order to serve a particular function. In this application the provision of the component within the box section may be integrated into the car manufacturing process in that the component containing the foamable material may be mounted within the box section and the section assembled into the vehicle frame, sometimes known as the "body in white". The body in white may then be subjected to the conventional electrocoat anticorrosion coating, sometimes known as "e-coat" in which the vehicle is passed through a bath of anticorrosion material and a coating is deposited electrolytically on the metal. After the coating has been deposited it is then dried, typically at a temperature of from 150°C to 180°C. The foamable material of the component can be formulated through choice of blowing agent and blowing agent activator (if required) so that it will foam at the conditions employed to dry the e-coat and will also bond to the carrier and the internal surface of the metal box section under these conditions. Typically e-coat is dried by passing the coated body through an oven and the foamable formulation is developed according to the residence time and temperature profile of the oven. In this way the foamable material will expand and fill the gap between the component and the interior surface of the metal box section to bond the two together and impart the desired function to the system. In this embodiment the core, provided with the cavities, should not be deleteriously affected by the conditions required for foaming. For example it should not be made of a material that melts at the temperatures required for foaming.

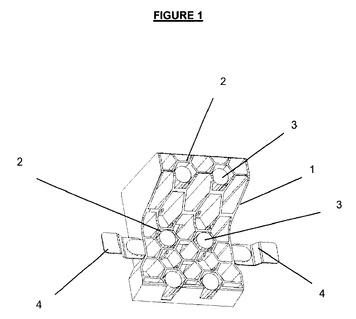

The present invention is illustrated by reference to the accompanying drawings in which Figure 1 shows a honeycomb core provided with foamable material within the cavities of the honeycomb structure, suitable for reinforcing an automobile door.

Figure 2 shows a door reinforced by the system shown in Figure 1.

Figure 3 shows another component according to the invention suitable for reinforcing a longitudinal section of an automobile.

Figure 4 shows a longitudinal reinforced by the system shown in Figure 3.

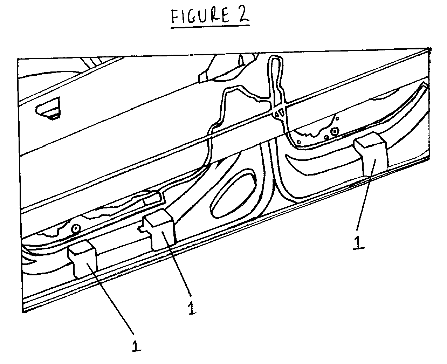

Figure 1 shows an injection moulded polyamide honeycomb core structure (1) provided with several cavities (2) and some of the cavities contain cylinders of foamable material (3). The cavities which contain the foamable material are tapered so that they hold the foamable material in place. The structure shown in Figure 1 is designed to reinforce a door and is provided with clips (4) to enable it to be attached to the door frame. Figure 2 shows three of the structures illustrated in Figure 1 attached to the door frame to provide structural reinforcement.

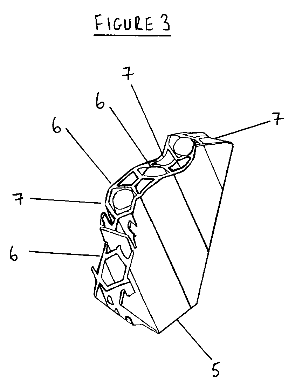

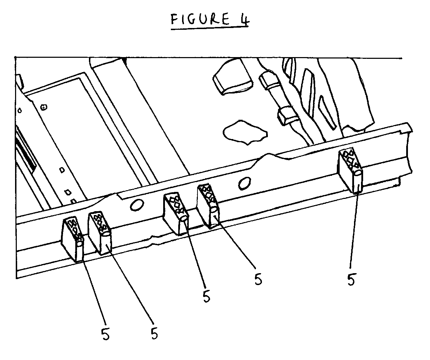

Figure 3 shows an injection moulded part (5) provided with cavities (6) some of which contain cylinders of foamable material (7). The part (5) is designed for reinforcement of an automobile longitudinal section and Figure 4 is a cut away view of an automobile longitudinal showing five parts (5) in place to provide reinforcement.

In operation of both systems the parts may be mounted in the appropriate location in the vehicle during body assembly. The body may then be subjected to anticorrosion treatment (such as the e-coat electrocoat process) and then baked to cure the coating. The foamable material may be formulated so that it will expand and develop adhesive properties under the baking conditions. In his way the foamable material will expand and adhere to both the honeycomb carrier and the metal to provide the desired reinforcement.

## Claims

**1.** A part for placement within a hollow member comprising a core comprising a plurality of cavities in which foamable material is removably located therein the cavities being shaped so that upon expansion of the foamable material the foam extends beyond the cavity to bridge the gap between the core and the interior surface of the hollow member to form a bond therebetween.

**2.** A part according to Claim 1 for reinforcement of the hollow member.

**3.** A part according to Claim 1 to provide a sealant or act as an acoustic baffle.

**4.** A part according to any of the preceding claims in which the cavities are in the form of a honeycomb structure.

**5.** A part according to any of Claims 1 to 3 in which the core has an ice tray structure.

**6.** A part according to any of the preceding claims in which the core is made of metal such as steel and aluminium or synthetic materials such as thermosetting or thermoplastic materials.

**7.** A part according to Claim 6 in which the core is derived from a fibre reinforced thermoplastic especially polyamide (nylon) or polypropylene filled with glass fibre, metal fibre and/or carbon fibre.

**8.** A part according of any of the preceding claims in which the cavities in the core are shaped so that they can physically retain a piece of the foamable material when it is introduced into the cavity.

**9.** A part according to Claim 8 in which the cavities are tapered tubular structures with the wide end of the taper at the opening of the cavity.

**10.** A part according to Claim 9 in which the foamable material is cylindrical and may be inserted into the cavity where it will be retained by the narrowing of the tapered bore of the cavity.

**11.** A part according to any of the preceding claims in which the component is to perform, a reinforcing and strengthening function and a rigid foam is used.

**12.** A part according to Claim 11 in which the rigid foam is an epoxy foam or a polyurethane foam particularly blocked polyurethane foams which are provided with blocking groups designed to be liberated to enable reaction at the temperature at which foaming is desired to take place.

**13.** A part according to any of the preceding claims in which the foamable material is deposited directly into the cavities by an applicator.

**14.** A part according to any of Claims 1 to 12 in which the foamable material is preformed into an appropriate shape for insertion into the cavity.

**15.** A part according to any of the preceding claims in which different foamable material are used in different cavities.

**16.** A part according to any of the preceding claims in which different foamable materials are used in different parts of the same cavity.

**18.** A process wherein a part according to any of the preceding claims is mounted within a box section of an automobile and the section assembled into the vehicle frame and the frame is then subjected to the electrocoat anticorrosion coating, in which the vehicle is passed through a bath of anticorrosion material and a coating is deposited electrolytically on the metal and after the coating has been deposited it is then dried, at a temperature of from 150°C to 180°C wherein the foamable material of the component is formulated so that it will foam at the conditions employed to dry the e-coat and will bond to the carrier and the internal surface of the metal box section.
